# EUROPÄISCHE PATENTANMELDUNG

(11) **EP 4 582 908 A1**
(43) Veröffentlichungstag der Anmeldung: **09.07.2025**
(21) Anmeldenummer: 24215079.5
(22) Anmeldetag: 25.11.2024
(51) Int. Cl.: G06F 3/01, G05B 19/18, G05B 19/409, G06T 19/00

(54) **BEDIENUNTERSTÜTZUNGSSYSTEM FÜR EINEN ANWENDER EINER BEHÄLTERBEHANDLUNGSANLAGE**

(30) Priorität: 04.01.2024 DE 102024100207
(71) Anmelder: KRONES Aktiengesellschaft, 93073 Neutraubling (DE)
(72) Erfinder: Hennek, Heinz, 93073 Neutraubling (DE); Albrecht, Thomas, 93073 Neutraubling (DE)
(74) Vertreter: Grünecker Patent- und Rechtsanwälte PartG mbB

(57) **Zusammenfassung**

Die vorliegende Erfindung umfasst ein Bedienunterstützungssystem für einen Anwender einer Behälterbehandlungsanlage, insbesondere einer Flaschenabfüllanlage. Das Bedienunterstützungssystem umfasst eine Positionserfassungsvorrichtung, die eine Position und Orientierung des Anwenders in der Behälterbehandlungsanlage erfasst, wobei die Positionserfassungsvorrichtung, basierend auf der Position und Orientierung des Anwenders eine Behandlungsvorrichtung in der Behälterbehandlungsanlage erkennt, die vom Anwender bedient wird, eine Betriebserfassungsvorrichtung, die den Betriebszustand der erkannten Behandlungsvorrichtung zu erfasst, und eine mobile Bedienunterstützungsvorrichtung, die den Anwender basierend auf dem Betriebszustand der erkannten Behandlungsvorrichtung bei der Bedienung der Behandlungsvorrichtung mittels Bedienungsempfehlungen unterstützt.

## Beschreibung

### Technisches Gebiet

Die vorliegende Erfindung bezieht sich auf ein Bedienunterstützungssystem für einen Anwender einer Behälterbehandlungsanlage, insbesondere einer Flaschenabfüllanlage. Derartige Behälterbehandlungsanlagen, mit beispielsweise Füllvorrichtungen oder Blasvorrichtungen für Kunststoffbehältnisse, Inspektionsvorrichtungen, Transportvorrichtungen, Verpackungsvorrichtungen, Markiervorrichtungen oder Etikettier-Vorrichtungen sind aus dem Stand der Technik bekannt.

### Stand der Technik

Während des Betriebs einer Behälterbehandlungsanlage sind im Laufe der Anwendung Bedienungsvorgänge, Umrüstarbeiten, Versorgungsschritte, Schritte der Fehlerbehebung (Trouble-Shooting) oder ähnliches notwendig. Bei Behälterbehandlungsanlagen handelt es sich üblicherweise um sehr große Anlagen, welche von einem Anwender nicht gleich zu Beginn eines Betriebs vollständig überblickt und verstanden werden. Aufgrund des wechselnden Aufbaus und der Komplexität der Anlagen ist der Betriebsablauf der Anlage für den Anwender meist unbekannt und schwer nachvollziehbar. Die Erfüllung der Aufgaben durch einen Anwender ist stark von dessen Leistungsfähigkeit und Know-How abhängig. In Konsequenz ist auch die Effizienz der Behälterbehandlungsanlage abhängig von der Leistungsfähigkeit des einzelnen in der Anlage arbeitenden Anwenders.

Aus der EP 2901225 ist ein Bediensystem für eine Anlage, insbesondere für eine Getränkeverarbeitungsmaschine bekannt. Das Bediensystem umfasst ein mobiles Bediengerät für die Anlage, einen Signalgeber zur Meldung von Alarm- und/oder Warnsignalen, und einer Brille, die ein Anzeigesystem umfasst, das insbesondere als Head-Mounted-Display oder virtuelle Netzhautanzeige oder Projektor ausgebildet ist, und wobei das Bediengerät und/oder der Signalgeber und/oder die Sicherheitsbrille jeweils einen Datentransmitter zum Austausch von Maschineninformationen und/oder Alarm- und/oder Warnsignalen umfassen. Ein Anwender des Bediensystems bekommt auf dem Anzeigesystem virtuelle Bediengeräte der Anlage angezeigt und kann Parameter der Anlage mittels Gesten oder Bediengerät besonders einfach verändern. Das Bediensystem kann über das Anzeigesystem auf Versorgungsrückstände, Fehlverhalten der Anlage oder dergleichen hinweisen und den Anwender darauf aufmerksam machen.

WO 2016207948 bietet ein Leitsystem für einen Anwender auf dessen Basis der Anwender von einer momentan georteten Position zu einer Prozessvorrichtung in einer Anlage geleitet werden kann, an der ein Arbeitsschritt durchzuführen ist. Dem Anwender werden durch eine Anzeigevorrichtung seine aktuelle Position und ein Weg, den der Anwender in einem Arbeitsbereich nehmen kann, angezeigt. Der Anwender wird somit schnellst möglich an eine Prozessvorrichtung geführt, an der ein Arbeitsschritt durchzuführen ist. Dies erhöht die Effizienz der Anlage durch Koordination der Bewegung eines Anwenders in einer Anlage.

Die Erfüllung der Aufgaben durch den Anwender ist jedoch weiterhin stark von dessen Ausbildungsstand und Aufnahmefähigkeit abhängig. Ein Anwender, der eine Vorrichtung in der Anlage zu der er geführt wird nie oder selten bedient hat, weiß nicht wie diese zu bedienen ist. Die Vorrichtungsparameter werden ihm angezeigt, aber es bedarf einer Vorbereitung oder einer Unterweisung des Anwenders damit dieser die Vorrichtung für einen geeigneten Betrieb bedient. Dadurch kann es zu Zeitverlusten kommen bis der Anwender nachvollzogen hat, welcher Arbeitsschritt durchzuführen ist und wie sich eine optimale Einstellung der Anlage gestaltet. Andererseits kann eine Fehlbedienung zu Betriebspausen oder zum Herunterfahren des Betriebsprozesses der Anlage führen. Dies bedingt Verzögerungen in den Prozessabläufen der Behälterbehandlungsanlage und führt somit zu einem Herabsetzen der Produktivität der Behälterbehandlungsanlage.

### Aufgabe

Der vorliegenden Erfindung liegt daher die Aufgabe zugrunde, ein Bedienunterstützungssystem bereitzustellen, das es ermöglicht die Bedienung von Vorrichtungen in einer Behälterbehandlungsanlage durch Unterstützung des Anwenders zu vereinfachen. Daneben soll die Bedienzuverlässigkeit für derartige Anlagen erhöht werden. Diese Aufgabe wird erfindungsgemäß durch den Gegenstand von Anspruch 1 erreicht. Ein Verfahren zur Lösung der oben genannten Probleme wird durch das Anzeigeverfahren gemäß Anspruch 11 gelöst. Vorteilhafte Ausführungsformen und Weiterbildungen sind Gegenstand der Unteransprüche.

### Lösung

Ein erfindungsgemäßes Bedienunterstützungssystem für einen Anwender einer Behälterbehandlungsanlage, insbesondere einer Flaschenabfüllanlage, umfasst eine Positionserfassungsvorrichtung, die eine Position und Orientierung des Anwenders in der Behälterbehandlungsanlage erfasst, wobei die Positionserfassungsvorrichtung basierend auf der Position und Orientierung des Anwenders eine Behandlungsvorrichtung in der Behälterbehandlungsanlage erkennt, die vom Anwender bedient wird, eine Betriebserfassungsvorrichtung, die den Betriebszustand der erkannten Behandlungsvorrichtung erfasst, und eine mobile Bedienunterstützungsvorrichtung, die den Anwender basierend auf dem Betriebszustand der erkannten Behandlungsvorrichtung bei der Bedienung der Behandlungsvorrichtung mittels Bedienungsempfehlungen unterstützt.

Hierdurch ergibt sich der Vorteil, dass das erfindungsgemäße Bedienunterstützungssystem den Anwender durch aktive Bedienhinweise unterstützt die Behälterbehandlungsanlage sachgemäß und zielgerichtet zu bedienen. Der Bediener wird nicht nur zu einer Problemstelle geführt, sondern aktiv bei der Umsetzung der Problemlösung unterstützt. Daraus ergibt sich unabhängig vom Ausbildungsgrad und Kenntnisstand des Anwenders ein schnelleres und einfacheres Bedienen der Anlage, ein sachgemäßes Reagieren auf Fehler, zielgerichtetes Umrüsten und rechtzeitiges Versorgen der Vorrichtungen innerhalb der Behälterbehandlungsanlage. Dies führt zur Steigerung der Effizienz und Produktivität der Behälterbehandlungsanlage. Die Mobilität der Bedienunterstützungsvorrichtung sorgt für eine einfache Handhabung des Systems und die Möglichkeit der Nachrüstung von bestehenden Behälterbehandlungsanlagen.

Vorteilhafte Weiterbildungen der Erfindung sind Gegenstände der abhängigen Ansprüche.

Es kann von Vorteil sein, wenn die Positionserfassungsvorrichtung, die Betriebserfassungsvorrichtung und die mobile Bedienunterstützungsvorrichtung in einer Vorrichtung zusammengefasst sind, bevorzugt in einer Brille, die in das Blickfeld des Anwenders Informationen einblendet, noch bevorzugter einer Augmented-Reality-Brille. Die Zusammenfassung der Merkmale in einem Gerät fördert die Kompaktheit des Systems und somit einen Tragekomfort für den Anwender, der sich somit schneller in der Anlage bewegen kann. Eine derartige Zusammenfassung in einem Gerät vereinfacht zudem eine Nachrüstung einer bestehenden Behälterbehandlungsanlage, da lediglich die Brille und deren Verbindung zu einer Steuerstation benötigt wird. Die Verwendung von Brillen bzw. Augmented-Reality-Brillen ermöglicht die gleichzeitige Sicht auf die Anlage und die Einstellungen und Parameter einer zu bedienenden Vorrichtung. Die Verwendung einer Augmented-Reality-Brille weckt zudem die Neugier und steigert die Motivation des Anwenders verlässliche Arbeit abzuliefern. Gleichzeitig kann durch die mobile Bedienunterstützungsvorrichtung in Form einer Brille der Platzbedarf für umfangreiche Anzeigen innerhalb der Behälterbehandlungsanlage vermieden werden.

Es kann sich als nützlich erweisen, wenn das Bedienunterstützungssystem des Weiteren mindestens einen Datentransmitter zum Austausch von Zustands-Informationen zwischen der Positionserfassungsvorrichtung, der Betriebserfassungsvorrichtung, der mobilen Bedienunterstützungsvorrichtung und einer Steuerungsstation der Behälterbehandlungsanlage umfasst, wobei die Steuerungsstation bevorzugt ein externer Server oder eine Cloud ist. Somit kann ein kabelloser Austausch zwischen den Vorrichtungen stattfinden und Zustands-Informationen können in Echtzeit ausgetauscht werden. Gleichzeitig kann durch die externe Verarbeitung von Daten der Platzbedarf für umfangreiche Serveranlagen innerhalb der Behälterbehandlungsanlage vermieden werden. Eine derartige Gestaltung des Bedienunterstützungssystems vereinfacht zudem eine Nachrüstung einer bestehenden Behälterbehandlungsanlage, da lediglich die Brille und deren Verbindung zu der Steuerstation benötigt wird.

Es kann hilfreich sein, wenn das Bedienunterstützungssystem des Weiteren eine Zustandssimulationsvorrichtung umfasst, die unter Einbezug der Umgebungsrandbedingungen ein digitales Abbild des Betriebszustands jeder Behandlungsvorrichtung der Behälterbehandlungsanlage, bevorzugt zeitgleich zum Betrieb, simuliert, Betriebsszenarien simuliert und basierend auf deren Ergebnissen Bedienungsempfehlungen mittels Datentransmitter an die mobile Bedienunterstützungsvorrichtung überträgt. Dies hat den Vorteil, dass mit einem digitalen Zwilling der Anlage virtuell Betriebsszenarien derart durchsimuliert werden können, dass Parameterempfehlungen in Echtzeit berechnet werden können, die einen verbesserten Betrieb der Anlage hervorrufen. Die Zustandssimulationsvorrichtung simuliert Best-Case-Szenarien und durchläuft Optimierungsschleifen und hat somit aufwandsarm Zugang zu Betriebszuständen der Anlage, auf deren Basis, beispielsweise durch eine KI-gesteuerte Strategie Entscheidungen über den Betriebszustand getroffen werden können.

Es kann sich als vorteilhaft erweisen, wenn die Bedienungsempfehlungen von der mobilen Bedienunterstützungsvorrichtung angezeigt werden und mindestens eine, zwei oder mehrere der folgenden sind: Parametereinstellvorgaben für Stellgrößen der Behandlungsvorrichtung, virtuelle Anzeige einer Bedienung der Behandlungsvorrichtung, bevorzugt eine Bedienung mittels Werkzeug, Maßnahmen zur Fehlerbehebungen in der Behandlungsvorrichtung oder Optimierungsvorschläge zur Anordnung der Behandlungsvorrichtung in der Behälterbehandlungsanlage. Somit kann erreicht werden, dass die Vorrichtungen in der Anlage geeignet eingestellt sind, Reparaturen an der Anlage schnell durchgeführt werden können, Fehler schnell behoben werden können und die Anlage in der für den Anwendungsfall geeigneten Anordnung ist. Dies steigert in Summe die Verfügbarkeit und Effizienz der Anlage.

Es kann nützlich sein, wenn das Bedienunterstützungssystem des Weiteren eine Anzeigevorrichtung umfasst die eine Richtung eines kürzesten Wegs zu einer weiteren Behandlungsvorrichtung, bevorzugt durch einen Pfeil am Boden, noch bevorzugter von der mobilen Bedienunterstützungsvorrichtung auf den Boden projiziert, anzeigt, wobei die weitere Behandlungsvorrichtung eine Behandlungsvorrichtung ist, an der eine Bedienungsempfehlungen durchzuführen ist. Falls eine Parameteränderung, Fehlerbehebung oder ein Versorgungsschritt an einer zweiten Behandlungsvorrichtung durchzuführen ist, sorgt dies für markierte Laufwege für Anwender und somit zu einem schnellen Erreichen und zeitnaher Umsetzung der Bedienschritte der zweiten Behandlungsvorrichtung.

Es kann praktisch sein, wenn die mobile Bedienunterstützungsvorrichtung eine Hör-/Sprecheinheit umfasst, die eine Spracherkennung umfasst und insbesondere mit dem Datentransmitter der Bedienunterstützungsvorrichtung zum Austausch von Sprachinformation verbunden ist. Dies ermöglicht schnellen Informationsaustausch und zeitliche Optimierung der Bedienung der Anlage, da eine Auswahl mindestens einer Bedienungsempfehlung erkannt wird und an die Behälterbehandlungsanlage zurückgegeben wird.

Es kann auch praktisch sein, wenn die mobile Bedienunterstützungsvorrichtung einen Gehörschutz zur Unterdrückung von störenden Umgebungsgeräuschen umfasst, der insbesondere mit aktiver Schallunterdrückung arbeitet. Eine derartige Einrichtung fördert die Konzentration des Anwenders auf die Durchführung von Arbeitsschritten an der Anlage.

Es kann auch praktisch sein, wenn die mobile Bedienunterstützungsvorrichtung eine Kamera zur Erfassung von Objekten im Sichtbereich des Anwenders und zum Aufzeichnen von im Sichtbereich des Anwenders auftretenden Zuständen umfasst. Somit kann ein Arbeitsfeld des Anwenders beispielsweise für Lern- und Übungszwecke aufgezeichnet werden und ein Ausbilder oder Fachmann kann die Sicht des Anwenders mitverfolgen, um Fehlfunktionen zu erkennen und weitere Bedienhinweise geben zu können.

Es kann auch praktisch sein, wenn die mobile Bedienunterstützungsvorrichtung eine zweite Kamera umfasst, die zur Erfassung mindestens eines Auges des Anwenders ausgebildet ist, um den Anwender zu identifizieren und/oder ausgebildet ist, um eine Blickrichtung des Anwenders zu erkennen. Somit kann dem Anwender ein Profil je nach Kenntnisstand zugeordnet werden und der Kenntnisstand des Anwenders kann in die Bedienunterstützung einfließen. Über ein derartiges Profil kann ein Berechtigungslevel des Anwenders abgefragt werden, welches die Bedienoberfläche beeinflusst oder den Anwender an bestimmten Arbeitsaufgaben mit höherem Sicherheitslevel hindern. Außerdem kann über eine derartige zweite Kamera eine Steuerung und Auswahl von Empfehlungen über den Blick des Anwenders durchgeführt werden. Dies ermöglicht schnellen Informationsaustausch und eine zeitliche Optimierung der Bedienung der Anlage, da eine Auswahl mindestens einer Bedienungsempfehlung erkannt wird und an die Behälterbehandlungsanlage zurückgegeben wird.

Es kann auch praktisch sein, wenn die mobile Bedienunterstützungsvorrichtung eine Gestenerkennungseinheit umfasst, um Gesten des Anwenders zu erkennen. Dies ermöglicht eine schnelle Auswahl der Bedienungsempfehlungen und eine zeitliche Optimierung der Bedienung der Anlage, da eine Auswahl mindestens einer Bedienungsempfehlung erkannt wird und an die Behälterbehandlungsanlage zurückgegeben wird.

Es kann auch praktisch sein, wenn die mobile Bedienunterstützungsvorrichtung dem Anwender zwei unterschiedliche Bilder anzeigt, um einen Ist-Zustand und einen empfohlenen Zustand der Behandlungsvorrichtung darzustellen. Somit sieht der Anwender auf einen Blick eine Vielzahl von für die Bedienung notwendigen Informationen, um einen Arbeitsschritt schnell und zielgerichtet durchzuführen.

Es kann sich als sinnvoll erweisen, wenn die Positionserfassungsvorrichtung die Wege des Anwenders und die Zustandsinformationen und Umgebungsrandbedingungen des Betriebs aufzeichnet und speichert, und die Betriebserfassungsvorrichtung die Umgebungsrandbedingungen und den Betriebszustand, der auf dem Weg des Anwenders angeordneten Behandlungsvorrichtung, aufzeichnet und speichert. Dies dient der Dokumentation der Durchführung von Arbeitsschritten und Unterstützung der Datenanalyse zur Speisung der Simulationen und Nachbereitung von Betriebsprozessen der Anlage. Es können auch Rückschlüsse auf die Effizienz eines Anwenders und der Behandlungsvorrichtungen gezogen werden.

Die Erfindung umfasst des Weiteren eine Behälterbehandlungsanlage, insbesondere eine Flaschenabfüllanlage, die mindestens eine Behandlungsvorrichtung, die einen Behälter (B) behandelt, und ein Bedienunterstützungssystem gemäß einem der vorangehenden Aspekte, umfasst.

Ein erfindungsgemäßes Bedienverfahren zur Unterstützung eines Anwenders einer Behälterbehandlungsanlage, insbesondere einer Flaschenabfüllanlage umfasst das Erfassen einer Position und Orientierung des Anwenders in der Behälterbehandlungsanlage, wobei basierend auf der Position und Orientierung des Anwenders eine Behandlungsvorrichtung in der Behälterbehandlungsanlage erkannt wird, die vom Anwender bedient wird, das Erfassen eines Betriebszustands, der erkannten Behandlungsvorrichtung und das Unterstützen des Anwenders bei der Bedienung der erkannten Behandlungsvorrichtung mittels Bedienungsempfehlungen, basierend auf dem Betriebszustand der erkannten Behandlungsvorrichtung.

Weitere bevorzugte Weiterbildungen der Erfindung ergeben sich durch Kombinationen der Merkmale, die in der Beschreibung, den Ansprüchen und den Figuren offenbart sind.

### Kurze Beschreibung der Figuren

Es zeigen:
Fig. 1 eine perspektivische Ansicht eines Anwenders mit dem Bedienunterstützungssystem vor einer Behandlungsvorrichtung einer Behälterbehandlungsanlage.
Fig. 2 eine mobile Bedienunterstützungsvorrichtung des Bedienunterstützungssystems in Form einer Augmented-Reality Brille
Fig. 3 eine Behälterbehandlungsanlage mit mehreren Behandlungsvorrichtungen.

### Detaillierte Beschreibung der Erfindung

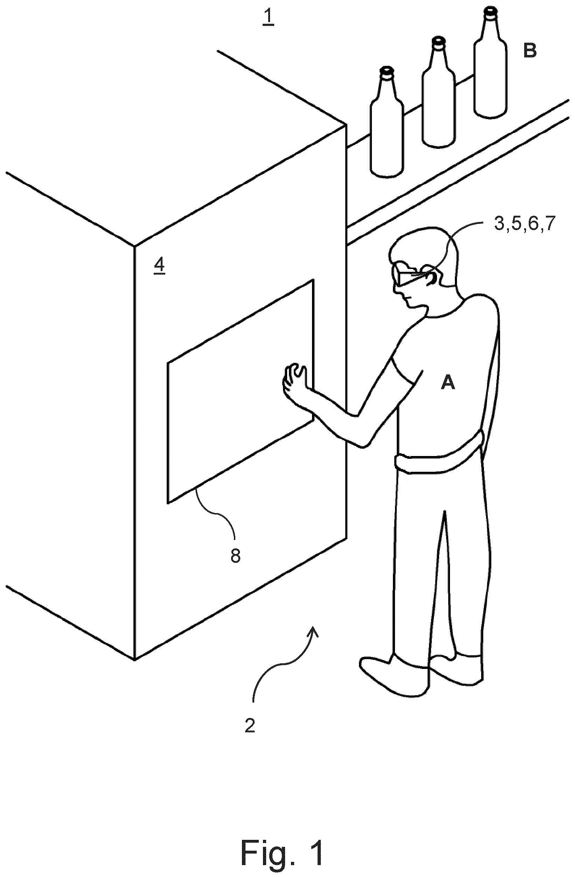

Fig. 1 zeigt eine perspektivische Ansicht eines Anwenders A mit dem Bedienunterstützungssystem 2 vor einer Behandlungsvorrichtung 4 einer Behälterbehandlungsanlage 1. Fig. 1 ist eine zweidimensionale Draufsicht auf die Behälterbehandlungsanlage 1. Die Behälterbehandlungsanlage 1 ist eine Bearbeitungslinie von Vorrichtungen zum Behandeln von Behältnissen B und insbesondere von Getränkebehältnissen B mit mindestens einer Behandlungsvorrichtung 4. Die Bearbeitungslinie kann modular aufgebaut sein und sich aus Transportvorrichtungen, Blasformvorrichtungen, Füllvorrichtungen, Inspektionsvorrichtungen, Verpackungsvorrichtungen, Markierungsvorrichtungen, Etikettier-Vorrichtungen und dergleichen zusammensetzen, die Bearbeitungsschritte an den Behältnissen B durchführen. Auch mobile Versorgungsvorrichtungen können an die Bearbeitungslinie angebaut werden. Durch Umrüstarbeiten kann die Bearbeitungslinie bedarfsgerecht umgebaut werden, so dass die Bearbeitungslinie Behältnisse B aus unterschiedlichem Material in verschiedenen Größen und Stückzahlen bearbeiten kann.

Die Behandlungsvorrichtung 4 umfasst eine Anzeigevorrichtung 8 auf der ein Betriebsstatus der Behandlungsvorrichtung 4 angezeigt werden kann. Die Anzeigevorrichtung 8 zeigt den Ist-Zustand der Behandlungsvorrichtung 4 an oder weist auf einen Versorgungszustand hin. Möglicher Bedarf an Versorgungsnachschub oder Fehlfunktionen werden ebenfalls auf der Anzeigevorrichtung 8 angezeigt. Die Anzeigevorrichtung 8 kann auch als Bedienfeld verwendet werden, um Eingaben durch einen Anwender A anzunehmen. Mit anderen Worten, ist die Anzeigevorrichtung 8 ein berührungsempfindliches Anzeigegerät, wobei eine angezeigte Ansicht durch Berührung auch verschoben, gedreht und/oder gezoomt werden kann.

Der Anwender A ist mit einem Bedienunterstützungssystem 2 ausgerüstet. Das Bedienunterstützungssystem 2 umfasst eine Positionserfassungsvorrichtung 3, eine Betriebserfassungsvorrichtung 5 und eine mobile Bedienunterstützungsvorrichtung 6. Die Positionserfassungsvorrichtung 3, die Betriebserfassungsvorrichtung 5 und die mobile Bedienunterstützungsvorrichtung 6 sind in einer Vorrichtung zusammengefasst. Diese Vorrichtung ist bevorzugt eine Brille 7, die in das Blickfeld des Anwenders Informationen einblendet. Noch bevorzugter ist die Brille eine Augmented-Reality-Brille 7.

Die Positionserfassungsvorrichtung 3 erfasst die Ist-Position und Orientierung des Anwenders A und gibt diese an das Bedienunterstützungssystem 2 weiter, so dass eine Behandlungsvorrichtung 4 in der Behälterbehandlungsanlage 2 erkannt werden kann, vor der der Anwender A steht bzw. die der Anwender A bedient. Die Ortung kann mittels GPS bzw. einer Indoor-Ortungstechnologie wie bspw. Ultra-Wideband (UWB), Radio Frequency Identification (RFID), Bluetooth oder W-Lan geschehen. Eine Erfassung der durch den Anwender A bedienten Behandlungsvorrichtung 4 kann auch über das Erkennen von QR-Codes auf den Behandlungsvorrichtung 4 geschehen, die mittels Kamera 5 im Bedienunterstützungssystem 2 aufgenommen werden. Somit ist es möglich, dass eine Erfassung der Behandlungsvorrichtung 4 ohne Ortung des Anwenders geschehen kann. Trotzdem kann über einen Anlagenplan der Behälterbehandlungsanlage 1 auf die Position des Anwenders A rückgeschlossen werden.

Die Betriebserfassungsvorrichtung 5 bestimmt den momentanen Betriebszustand der Behälterbehandlungsanlage 4 vor der sich der Anwender mit dem Bedienunterstützungssystem 2 befindet. Dies geschieht bei weniger komplexen Behälterbehandlungsanlagen 4 (nur An/Aus) mittels Kamera 5. Für den Großteil der Behälterbehandlungsanlagen 4 bezieht die Betriebserfassungsvorrichtung 5 Betriebsinformationen von einer Steuerungsstation 9 der Behälterbehandlungsanlage 1 (nicht dargestellt). Die Steuerungsstation 9 ist bevorzugt eine externe Vorrichtung in Form eines Servers oder einer Cloud.

Die Steuerstation 9 ist dazu konfiguriert, unter Einbezug der Umgebungsrandbedingungen ein digitales Abbild des Betriebszustands jeder Behandlungsvorrichtung 4 der Behälterbehandlungsanlage 1, bevorzugt zeitgleich zum Betrieb der Behälterbehandlungsanlage, zu simulieren. Des Weiteren werden auf der Steuerstation 9 Betriebsszenarien simuliert und deren Ergebnisse analysiert. Aus den Simulationsergebnissen werden Parameteränderungen generiert, die Potential haben den Betrieb der Behandlungsvorrichtungen 4 in der Behälterbehandlungsanlage 1 zu optimieren. Hierzu zählen beispielsweise Spültemperaturen zur verlässlichen aber schnellen Spülung von Behältern B, Übergabegeschwindigkeiten der Behälter B an Transfervorrichtungen zur Stauvermeidung, Haltekräfte der Behälter B und dergleichen. Aus der Simulation werden demnach basierend auf dem Betriebszustand der von der Betriebserfassungsvorrichtung 5 erkannten Behandlungsvorrichtung 4 Bedienungsempfehlungen generiert, um den Betrieb der Behandlungsvorrichtung 4 zu optimieren.

Die mobile Bedienunterstützungsvorrichtung 6 ist konfiguriert die Bedienungsempfehlungen der erkannten Behandlungsvorrichtung 4 an den Anwender A zu übergeben und den Anwender A somit bei der Bedienung der Behandlungsvorrichtung 4 mittels Bedienungsempfehlungen zu unterstützen. Die Betriebserfassungsvorrichtung 5 ist mit der mobilen Bedienunterstützungsvorrichtung 6 verbunden und zeigt auf der mobilen Bedienunterstützungsvorrichtung 6 zusätzlich auch den Betriebszustand der erkannten Behälterbehandlungsanlage 4 an.

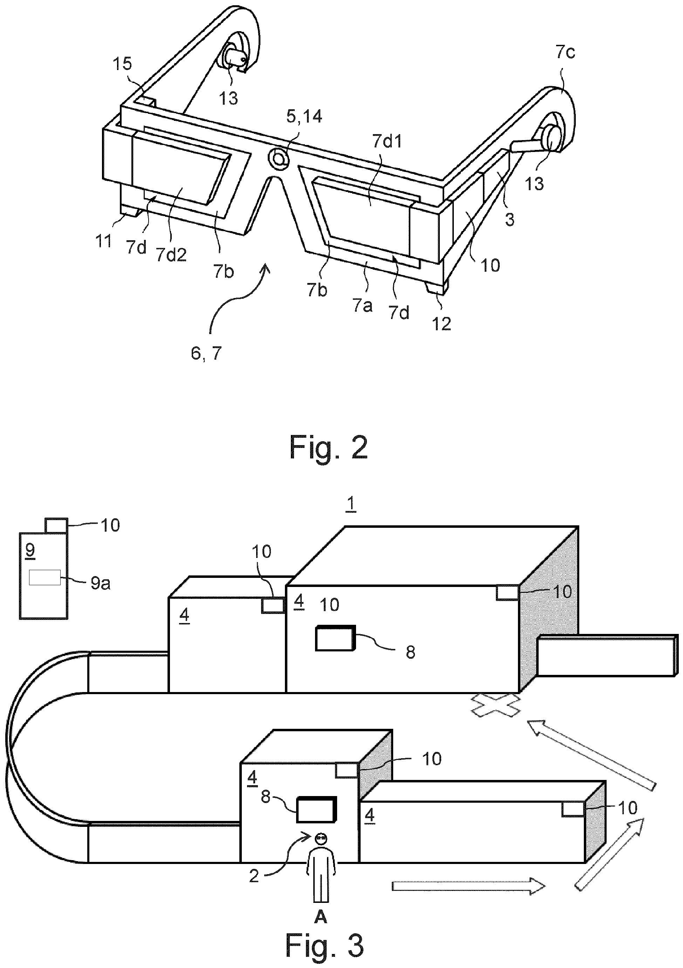

Fig. 2 zeigt eine perspektivische Darstellung der Bedienunterstützungsvorrichtung 6 in Form einer Brille 7. Die Positionserfassungsvorrichtung 3 und die Betriebserfassungsvorrichtung 5, in Form einer Kamera 5, können in der Brille 7 integriert sein. Wie in Fig. 2 gezeigt, umfasst die Brille 7 ein Brillengestell 7a, in das die Brillengläser 7b eingelassen sind. Des Weiteren weist die Brille 7 zwei Brillenbügel 7c auf, die über den Ohren des Anwenders A getragen werden. Vor jedem Brillenglas 7b der Brille 7 ist eine Brillen-Anzeigevorrichtung 7d angeordnet. Diese sind jeweils als optisches Glas bzw. Head-Mounted-Display 7d1, 7d2 ausgeführt. Dabei weisen die Head-Mounted-Displays 7d1, 7d2 Optiken auf, mit denen dem Anwender A für jedes Auge jeweils unterschiedliche Bilder von LCD-Displays eingeblendet werden. Dabei sind die Head-Mounted-Displays 7d1, 7d2 halbdurchlässig (semi-transparent) ausgeführt, so dass der Anwender A gleichzeitig die Umgebung vor der Sicherheitsbrille 7 sehen kann. Mit der Anzeigevorrichtung 7d können dem Anwender A für jedes Auge jeweils unterschiedliche Bilder angezeigt werden, so dass er auch dreidimensionale Informationen betrachten kann. Folglich sieht der Anwender A durch die Brille 7 einerseits die Umgebung und andererseits damit überlagerte, virtuelle Informationen. Beispielsweise kann dem Anwender A, ähnlich einer Legende in einer Zeichnung, zu einer im Blickfeld befindlichen Behandlungsvorrichtung die eingestellten Parameter und/oder der dafür geeignete Werkzeugtyp anzeigt werden.

Die Bedienunterstützungsvorrichtung 6 weist einen Datentransmitter 10 auf, der zum Austausch von Zustands-Informationen zwischen der Positionserfassungsvorrichtung 3, der Betriebserfassungsvorrichtung 5 und der mobilen Bedienunterstützungsvorrichtung 6 konfiguriert ist. Der Datentransmitter 50, ist als drahtlose Funkschnittstelle ausgeführt. Die Funkschnittstelle kann eine WLAN- oder Bluetooth-Schnittstelle sein. Mit dem Datentransmitter 10 steht die Brille 7 mit der Behälterbehandlungsanlage 4 der Fig. 1 in Verbindung. Ebenfalls kann die Brille 7 mit der Steuerstation 9 in Verbindung stehen. Durch diese Verbindung können Daten zwischen den Einheiten ausgetauscht werden. Die Brille 7 weist zudem die erste Kamera 5 auf, die nach vorne gerichtet ist und das Sichtfeld des Anwenders A erfasst. Dabei erzeugt die erste Kamera 5 Bilddaten von der Umgebung unmittelbar vor dem Anwender A, wobei diese über den Datentransmitter 10 an Kollegen weitergeben werden können, so dass diese den Anwender A beim Service unterstützen können. Ebenso können aus den Bilddaten automatisch Objekte oder auch QR-Codes im Sichtbereich des Anwenders A erkannt werden. Des Weiteren erfasst eine Gestenerkennungseinheit 12 die Hände des Anwenders A, um dessen Gesten als Sequenzen aufzunehmen. Die so gewonnenen Sequenzen können über den Datentransmitter 10 an die Steuerstation 9 übermittelt werden, um die Gesten zu analysieren.

Darüber hinaus weist die Brille 7 eine Hör-/Sprecheinheit 11, 13 auf. Diese weist einen Kopfhörer mit integriertem Gehörschutz auf. Hierbei sind die Kopfhörer 13 für jedes Ohr als Stöpsel (In-Ear-Kopfhörer) ausgebildet, so dass diese gegen den Hörkanal abdichten. Dadurch werden störende Umgebungsgeräusche unterdrückt und können nicht in den Hörkanal eindringen. Gleichzeitig erfasst ein Mikrophon 11 von außen die störenden Umgebungsgeräusche und gibt zusätzlich ein Kompensationssignal durch die Kopfhörer 13 ab, so dass die verbleibenden Umgebungsgeräusche weiter vermindert werden. Darüber hinaus werden Nutzsignale, wie beispielsweise menschliche Stimmen durch das Mikrophon 11 erfasst und durch eine Filtereinheit (hier nicht dargestellt) herausgefiltert und dem Anwender A von den Umgebungsgeräuschen isoliert über die Kopfhörer 13 eingespielt. Dadurch ist es dem Anwender A möglich, mit den Kollegen vor Ort zu kommunizieren. Des Weiteren kann die dargestellte Hör-/Sprecheinheit 11, 13 als Fernsprecheinrichtung in Verbindung mit einem Handy oder weiteren Einheiten des Bedienunterstützungssystems 2 verwendet werden. Beispielsweise um mit Kollegen zu sprechen, die nicht vor Ort sind. Die Hör-/Sprecheinheit 11, 13 kann über einen Datentransmitter 10 mit externen Einheiten verbunden sein, insbesondere um Sprachdaten zu übermitteln.

Darüber hinaus verfügt die Brille 7 über eine zweite Kamera 15, die auf ein Auge des Anwenders A gerichtet ist. Bilddaten der zweiten Kamera 15 werden mit dem Datentransmitter 10 an die Steuerstation 9 weitergeleitet. Dort dienen sie zur Analyse der Blickrichtung und zur Identifikation des Anwenders A über biometrische Erkennungsmerkmale.

Zusätzlich kann die Brille 7 die Positionserfassungsvorrichtung 3 in Form eines Ortungssensors 3 aufweisen, mit dem die Position und Orientierung der Brille 7 bestimmt werden kann. Der Ortungssensor 3 weist dabei mehrere Beschleunigungssensoren und Lagesensoren auf. Dadurch kann die Orientierung und Lage des Kopfs des Anwenders A zur Behälterbehandlungsanlage 4 bestimmt werden. Die Brille 7 weist eine Batterie zur Energieversorgung auf (hier nicht dargestellt) und kann auch einen eigenen Mikroprozessor als Steuereinheit umfassen.

Über die Bedienunterstützungsvorrichtung 6 bzw. die Brille 7 werden dem Anwender A durch die Steuerstation 9 Bedienungsempfehlungen bereitgestellt. Die Bedienungsempfehlungen werden dem Anmelder A mittels Sprachübertragung über die Hör-/Sprecheinheit 11, 13 oder in Bildformat über die Anzeigevorrichtung 7d bereitgestellt. Der Anwender A kann die Bedienungsempfehlungen mittels Sprachsteuerung, Gestensteuerung oder Blicksteuerung annehmen oder ablehnen. Die Bedienungsempfehlungen werden dem Anwender A von der mobilen Bedienunterstützungsvorrichtung 6 bereitgestellt. Die Bedienungsempfehlungen sind Parametereinstellvorgaben für Stellgrößen der Behandlungsvorrichtung 4, virtuelle Anzeigen einer Bedienung der Behandlungsvorrichtung 4, beispielsweise eine Bedienung mittels Werkzeug, Maßnahmen zur Fehlerbehebungen in der Behandlungsvorrichtung 4 oder Optimierungsvorschläge zur Anordnung der Behandlungsvorrichtung 4 in der Behälterbehandlungsanlage 1.

Fig. 3 zeigt eine Behälterbehandlungsanlage 1 mit mehreren Behandlungsvorrichtungen 4. Jede Behandlungsvorrichtung 4 umfasst eine Anzeigevorrichtung 8 und einen Datentransmitter 10. Die Steuerungsstation 9 mit der Zustandssimulationsvorrichtung 9a umfasst ebenfalls einen Datentransmitter 10. Jede Behandlungsvorrichtung 4 und die Steuerstation 9 weisen ebenfalls Datentransmitter 10 auf, so dass sämtliche Vorrichtungen untereinander und mit dem Bedienunterstützungssystem 2 vernetzt sind und im Datenaustausch stehen können.

Es können Betriebssituation vorkommen, in denen eine Bedienungsempfehlung an mindestens zwei Behälterbehandlungsanlage 4 durchzuführen ist. Somit muss ein Anwender A von einer ersten Behandlungsvorrichtung 4, an der ein erster empfohlener Schritt durchgeführt wurde, zu einer weiteren Behandlungsvorrichtung 4, an der ein weiterer empfohlener Schritt umgesetzt werden soll, geführt werden. Der kürzeste Weg von der ersten Behandlungsvorrichtung 4 zu der zweiten Behandlungsvorrichtung 4 wird in Fig. 3 durch Pfeile dargestellt, die dem Anwender A auf der Anzeigevorrichtung 7d der Brille 7 eingeblendet werden. So kann ein Anwender A schnell nachvollziehen, welcher Weg auszuwählen ist, um schnellstmöglich zu einer anderen Behälterbehandlungsanlage 4 zu gelangen, um dort einen Arbeitsschritt durchzuführen. Die Ziel-Behandlungsvorrichtung 4 wird, wie in Fig. 3 durch ein X markiert. Es ist zudem denkbar, dass der Anwender A durch Sprach-, Ton- und/oder Lichtsignale zur Ziel-Position geführt wird.

Die vorliegende Erfindung ist nicht auf die beschriebenen Ausführungsbeispiele beschränkt. Weitere Abänderungen und Variationen der Ausführungsbeispiele sind denkbar. So es wäre möglich, dass die Positionserfassungsvorrichtung 3 konfiguriert ist, die Wege des Anwenders A und die Zustandsinformationen und Umgebungsrandbedingungen des Betriebs der Behälterbehandlungsanlage 1 aufzuzeichnen und zu speichern. Die Betriebserfassungsvorrichtung 5 kann konfiguriert sein, die Umgebungsrandbedingungen und den Betriebszustand der auf dem Weg des Anwenders A angeordneten Behandlungsvorrichtungen 4 aufzuzeichnen und zu speichern. Dies ermöglicht eine vollständige Dokumentation des Betriebs der Behälterbehandlungsanlage 1 und der durchgeführten empfohlenen Arbeitsschritte für etwaige Nachbereitung und potentielle Rohdaten für weitere Simulationen der Zustandssimulationsvorrichtung 9a.

Es ist zudem denkbar, dass die Steuerstation 9 mehrere Bedienungsempfehlungen auflistet und diese nach Wichtigkeit, Dringlichkeit oder Komplexität priorisiert. Der jeweils priorisierte Arbeitsschritt wird auf dem Bedienunterstützungssystem 3 an den Anwender weitergegeben. Folgende Arbeitsschritte können über das Bedienunterstützungssystem 3 bereits angekündigt werden. Je nach Bewegung und Position des Anwenders A können Arbeitsschritte dynamisch an weitere Anwender A, die besser positioniert sind, vergeben werden.

Es ist zudem denkbar, dass der Weg zu einer Ziel- Behandlungsvorrichtung 4 Zwischenziele umfasst. So kann ein Anwender A beispielsweise an einer Versorgungsstation oder Werkstatt vorbeigeführt werden, um für den empfohlenen Arbeitsschritt entsprechend ausgerüstet zu sein.

Obwohl die Erfindung in Bezug auf spezifische Ausführungsformen für eine vollständige und klare Offenbarung beschrieben wurde, sind die beigefügten Ansprüche nicht auf diese Weise zu beschränken, sondern so auszulegen, dass sie alle Modifikationen und alternative Konstruktionen verkörpern, die einem Fachmann auf adäquate Weise einfallen können, welche in den Schutzbereich der Ansprüche fallen. Zusätzlich können die Merkmale verschiedener Implementierungsausführungsformen kombiniert werden, um weitere Ausführungsformen der Erfindung zu bilden.

### Bezugszeichenliste

1: Behälterbehandlungsanlage;
2: Bedienunterstützungssystem;
3: Positionserfassungsvorrichtung;
4: Behandlungsvorrichtung;
5: Betriebserfassungsvorrichtung;
6: mobile Bedienunterstützungsvorrichtung;
7: Brille, Augmented-Reality-Brille;
7a: Brillengestell;
7b: Brillenglas;
7c: Brillenbügel;
7d: Brillen-Anzeigevorrichtung;
7d1, 7d2: Optisches Glas, Head-Mounted-Display;
8: Anzeigevorrichtung;
9: Steuerungsstation;
9a: Zustandssimulationsvorrichtung;
10: Datentransmitter;
11: Hör-/Sprecheinheit;
12: Gestenerkennungseinheit;
13: Gehörschutz;
14: erste Kamera
15: zweite Kamera
A: Anwender
B: Behälter

## Patentansprüche

1. Ein Bedienunterstützungssystem (2) für einen Anwender einer Behälterbehandlungsanlage (1), insbesondere einer Flaschenabfüllanlage, umfassend:
eine Positionserfassungsvorrichtung (3), die konfiguriert ist, eine Position und Orientierung des Anwenders in der Behälterbehandlungsanlage (1) zu erfassen, wobei die Positionserfassungsvorrichtung (3) konfiguriert ist, basierend auf der Position und Orientierung des Anwenders eine Behandlungsvorrichtung (4) in der Behälterbehandlungsanlage (1) zu erkennen, die vom Anwender bedient wird,
eine Betriebserfassungsvorrichtung (5), die dazu konfiguriert ist, den Betriebszustand der erkannten Behandlungsvorrichtung (4) zu erfassen,
**gekennzeichnet durch:**
eine mobile Bedienunterstützungsvorrichtung (6), die konfiguriert ist, den Anwender basierend auf dem Betriebszustand der erkannten Behandlungsvorrichtung (4) bei der Bedienung der Behandlungsvorrichtung (4) mittels Bedienungsempfehlungen zu unterstützen.

2. Das Bedienunterstützungssystem (2) gemäß Anspruch 1, **dadurch gekennzeichnet, dass**
die Positionserfassungsvorrichtung (3), die Betriebserfassungsvorrichtung (5) und die mobile Bedienunterstützungsvorrichtung (6) in einer Vorrichtung zusammengefasst sind, bevorzugt in einer Brille (7), die in das Blickfeld des Anwenders Informationen einblendet, noch bevorzugter einer Augmented-Reality-Brille (7).

3. Das Bedienunterstützungssystem (2) gemäß einem der vorangehenden Ansprüche, **dadurch gekennzeichnet, dass** das Bedienunterstützungssystem (2) des Weiteren umfasst
mindestens einen Datentransmitter (10) zum Austausch von Zustands-Informationen zwischen der Positionserfassungsvorrichtung (3), der Betriebserfassungsvorrichtung (5), der mobilen Bedienunterstützungsvorrichtung (6) und einer Steuerungsstation (9) der Behälterbehandlungsanlage (1), wobei die Steuerungsstation (9) bevorzugt ein externer Server oder eine Cloud ist.

4. Das Bedienunterstützungssystem (2) gemäß dem vorangehenden Anspruch, **dadurch gekennzeichnet, dass** das Bedienunterstützungssystem (2) des Weiteren umfasst
eine Zustandssimulationsvorrichtung (9a), die dazu konfiguriert ist, unter Einbezug der Umgebungsrandbedingungen ein digitales Abbild des Betriebszustands jeder Behandlungsvorrichtung (4) der Behälterbehandlungsanlage (1), bevorzugt zeitgleich zum Betrieb, zu simulieren, Betriebsszenarien zu simulieren und basierend auf deren Ergebnissen Bedienungsempfehlungen mittels Datentransmitter (10) an die mobile Bedienunterstützungsvorrichtung (6) zu übertragen.

5. Das Bedienunterstützungssystem (2) gemäß einem der vorangehenden Ansprüche, **dadurch gekennzeichnet, dass**
die Bedienungsempfehlungen dem Anwender (A) durch die mobile Bedienunterstützungsvorrichtung (6) bereitgestellt werden und mindestens eines, zwei oder mehrere der folgenden sind:
Parametereinstellvorgaben für Stellgrößen der Behandlungsvorrichtung (4),
virtuelle Anzeige einer Bedienung der Behandlungsvorrichtung (4), bevorzugt eine Bedienung mittels Werkzeug,
Maßnahmen zur Fehlerbehebungen in der Behandlungsvorrichtung (4) oder
Optimierungsvorschläge zur Anordnung der Behandlungsvorrichtung (4) in der Behälterbehandlungsanlage (1).

6. Das Bedienunterstützungssystem (2) gemäß einem der vorangegangenen Ansprüche, **dadurch gekennzeichnet, dass** das Bedienunterstützungssystem (2) des Weiteren umfasst:
eine Anzeigevorrichtung (8), die konfiguriert ist, eine Richtung eines kürzesten Wegs zu einer weiteren Behandlungsvorrichtung (4), bevorzugt durch einen Pfeil am Boden, noch bevorzugter von der mobilen Bedienunterstützungsvorrichtung (6) auf den Boden projiziert, anzuzeigen, wobei die weitere Behandlungsvorrichtung (4) eine Behandlungsvorrichtung (4) ist, an der eine Bedienungsempfehlungen durchzuführen ist.

7. Das Bedienunterstützungssystem (2) gemäß einem der beiden vorangehenden Ansprüche, **dadurch gekennzeichnet, dass**
die mobile Bedienunterstützungsvorrichtung (6) eine Hör-/Sprecheinheit (11) umfasst, die eine Spracherkennung umfasst und insbesondere mit dem Datentransmitter (10) der Bedienunterstützungsvorrichtung (6) zum Austausch von Sprachinformation verbunden ist, und/oder
die mobile Bedienunterstützungsvorrichtung (6) einen Gehörschutz (13) zur Unterdrückung von störenden Umgebungsgeräuschen umfasst, der insbesondere mit aktiver Schallunterdrückung arbeitet, und/oder
die mobile Bedienunterstützungsvorrichtung (6) eine Kamera (14) zur Erfassung von Objekten im Sichtbereich des Anwenders und zum Aufzeichnen von im Sichtbereich des Anwenders auftretenden Zuständen umfasst, und/oder
die mobile Bedienunterstützungsvorrichtung (6) eine zweite Kamera (15) umfasst, die zur Erfassung mindestens eines Auges des Anwenders ausgebildet ist, um den Anwender zu identifizieren und/oder ausgebildet ist, um eine Blickrichtung des Anwenders zu erkennen und/oder
die mobile Bedienunterstützungsvorrichtung (6) eine Gestenerkennungseinheit (12) umfasst, um Gesten des Anwenders zu erkennen, und/oder
die mobile Bedienunterstützungsvorrichtung (6) dazu konfiguriert ist, dem Anwender (7) zwei unterschiedliche Bilder anzuzeigen, um einen Ist-Zustand und einen empfohlenen Zustand der Behandlungsvorrichtung (4) darzustellen.

8. Das Bedienunterstützungssystem (2) gemäß einem der vorangehenden Ansprüche, **dadurch gekennzeichnet, dass**
die Positionserfassungsvorrichtung (3) konfiguriert ist, die Wege des Anwenders und die Zustandsinformationen und Umgebungsrandbedingungen des Betriebs aufzuzeichnen und zu speichern, und
die Betriebserfassungsvorrichtung (5) konfiguriert ist, die Umgebungsrandbedingungen und den Betriebszustand der auf dem Weg des Anwenders angeordneten Behandlungsvorrichtung (4) aufzuzeichnen und zu speichern.

9. Eine Behälterbehandlungsanlage (1), insbesondere eine Flaschenabfüllanlage umfassend:
mindestens eine Behandlungsvorrichtung (4) die konfiguriert ist, einen Behälter (B) zu behandeln, und
ein Bedienunterstützungssystem (2) gemäß einem der vorangehenden Ansprüche.

10. Ein Bedienverfahren zur Unterstützung eines Anwenders einer Behälterbehandlungsanlage (1), insbesondere einer Flaschenabfüllanlage, wobei das Verfahren umfasst:
Erfassen einer Position und Orientierung des Anwenders in der Behälterbehandlungsanlage (1), wobei basierend auf der Position und Orientierung des Anwenders eine Behandlungsvorrichtung (4) in der Behälterbehandlungsanlage (1) erkannt wird, die vom Anwender bedient wird,
Erfassen eines Betriebszustands der erkannten Behandlungsvorrichtung (4),
**gekennzeichnet durch:**
Unterstützen des Anwenders bei der Bedienung der erkannten Behandlungsvorrichtung (4) mittels Bedienungsempfehlungen basierend auf dem Betriebszustand der erkannten Behandlungsvorrichtung (4).
